# EUROPEAN PATENT APPLICATION

(11) **EP 4 151 176 A1**
(43) Date of publication of application: **22.03.2023**
(21) Application number: 21197859.8
(22) Date of filing: 21.09.2021
(51) Int. Cl.: A61C 7/22, A61C 7/30, A61C 7/36

(54) **ARCHWIRE HOOKS, STOPS, AND METHODS OF USING SAME**

(30) Priority: 16.09.2021 US 202117477006
(71) Applicant: Ormco Corporation, Orange, CA 92867 (US)
(72) Inventor: Ward, Steve, Calgary, T3H 3T1 (CA); Lam, Hillary, Orange, 92867 (US)
(74) Representative: CSY Herts

(57) **Abstract**

An orthodontic appliance for attachment to an archwire having a rectangular cross section. The appliance includes a body having a base portion from which a pair of jaws extend. Each jaw a slot for receiving the archwire. A pair of opposing surfaces of the jaws contact the archwire along two edges and maintain a grip on the archwire during treatment. The grip is maintained on the archwire by residual elastic strain from an interference fit between the archwire and the slot. The appliance is not plasticly deformed. Each of the pair of opposing surfaces includes a concave portion to contact the archwire only at the two edges. The base portion includes a pedestal portion between the opposing surfaces. The pedestal portion has a flat that contacts a side of the archwire. Contact on the two edges and one side provides a triangular grip on the archwire.

## Description

### CROSS-REFERENCE TO RELATED APPLICATION

This application claims priority to U.S. Application Serial No. 29/751,112, filed September 18, 2020, the disclosure of which is incorporated by reference herein in its entirety.

### TECHNICAL FIELD

This invention relates to orthodontic appliances and, more particularly, to orthodontic appliances that are to be attached to an archwire for orthodontic treatment and methods of attaching those appliances to an archwire.

### BACKGROUND

Orthodontic appliances are designed for use in a patient's mouth and may be secured to a tooth to effectuate orthodontic treatment. When attached, appliances permit application of forces to move the tooth toward a final position according to a treatment plan. One type of orthodontic appliance is an orthodontic bracket. For treatment with orthodontic brackets, a bracket is bonded to each tooth in a patient's jaw. The adjacent orthodontic brackets on a single jaw are then interconnected by an archwire. The archwire has a predetermined shape that, when secured to the orthodontic brackets, will force teeth toward their predetermined final tooth positions according to the predetermined shape.

Orthodontic treatment may benefit from orthodontic appliances, in addition to brackets and archwires. These require an anchor location from which forces are applied to the patient's teeth. One anchor location is the archwire. An orthodontic appliance may be attached to the archwire and from that anchored position, the appliance applies additional forces to one or more of the patient's teeth. As an example, an orthodontic appliance anchored to the archwire on one jaw may be utilized to connect an orthodontic appliance to the patient's other jaw. In other words, the orthodontic appliance spans between the patient's jaws and is anchored to an upper archwire and a lower archwire. One type of appliance that is utilized to facilitate application of additional orthodontic forces is a crimpable hook.

Crimpable hooks are often used for intermaxillary fixation during orthodontic treatment and provide an anchor location on the archwire at which a clinician can attach an elastic, a chain, or a coil spring, among other orthodontic devices. Once secured to the archwire, these devices are used to apply other forces to teeth via their attachment to the crimpable hook. Crimpable hooks are attached to the archwire at a location spaced apart from and between orthodontic brackets and may be installed prior to or after the archwire is coupled to brackets in the patient's mouth. That is, a crimpable hook may be preassembled with the archwire or attached to the archwire after the archwire is inserted into the patient's mouth.

Generally, a crimpable hook includes a crimpable body for attachment to an orthodontic archwire. The crimpable body has an opening that receives the archwire. The crimpable body may then be closed around the archwire so that the hook is securely fastened to the archwire at a particular location. A hook extends from the crimpable body and is a finger-like projection that receives an elastic, chain, or coil spring or another device for use during treatment.

During installation of a crimpable hook, a clinician places the crimpable body around an archwire. When the crimpable body is in an opened configuration, the clinician may easily slide the crimpable hook along the archwire to a selected position. Once in that position, the clinician crimps the crimpable body onto the archwire. Th crimping process basically causes a friction fit of the crimped body on the archwire and secures the body to the archwire. The hook may then be utilized during orthodontic treatment.

During crimping, the crimpable body is deformed from its opened, undeformed configuration to a closed, deformed configuration. In the deformed configuration, the body is essentially irreversibly smashed around the archwire. Crimpable hooks are typically metal, such as stainless steel. To that end, the clinician applies a force sufficient to plasticly deform the steel. The metal of the crimpled body is thus deformed around the archwire. The clinician typically uses a specialized pair of pliers to apply the force necessary to plastically deform the metal. With plastic deformation, the crimped body frictionally grips the archwire and permits use of the hook as an anchor point on the archwire.

One drawback to crimpable hooks is the variation in the strength of the grip on the archwire. To be effective, the hook should not move appreciably following crimping. If the grip strength is below a threshold strength, the hook may move when loaded with a force sufficient to produce treatment. For example, it may rotate about the archwire or slide along the archwire in the direction of the applied force. Movement of the crimpable hook following crimping can nullify the desirable orthodontic treatment force. This can cause orthodontic treatment to be prolonged or ineffectual.

The strength of a grip between the crimped body and the archwire may vary significantly with variation in the clinician's application of force during installation. That is, the grip strength varies with the degree to which the crimpable body is deformed by the clinician. As an example, inadequate deformation of the crimpable body on the archwire may result in a weak grip on the archwire. Later application of orthodontic force in reliance on the hook as an anchor point may then cause movement of the hook. Other factors that influence the grip, which is related to the frictional force between the crimpable body and the archwire, include the material of the crimpable body and the archwire among other factors. With these physical and material limits, a crimped hook can slide along or rotate about the archwire when subject to the forces needed to produce the desired tooth movement if not properly crimped in position. Thus, a grip strength produced during crimping of the crimped hook onto the archwire plays a significant role in the efficiency of orthodontic treatment.

As an alternative to crimpable hooks, superelastic hooks have been developed. These devices are touted as having enhanced gripping action due to the properties of the superelastic metal. However, there remain disadvantages to these devices in that their application requires special tools (e.g., a specially designed pair of pliers) for placing the hooks on the archwire. The tools are needed to apply sufficient pressure on the hook/archwire so that the hook properly engages the archwire. Further, even with the special tools, fixing these hooks to the archwire is not without difficulty for the clinician as significant hand strength is required to properly place the hook on the archwire. Once installed on an archwire, like the crimpable archwire, the hook is not removable. That is, no consideration is given for removing the hook once installed. Essentially, these hooks are a one-time use device and may be hit or miss on placement.

While these orthodontic appliances have proven successful, there remains a need to reduce the frequency of failure of those and similar devices due to sliding movement along, rotation about an archwire following attachment to the archwire, or difficulties in placement and attachment of the appliance on an archwire.

### SUMMARY

The present invention overcomes the shortcomings and drawbacks of crimpable orthodontic appliances heretofore known for use in orthodontic treatment. While the invention will be described in connection with certain embodiments, it will be understood that the invention is not limited to those embodiments. On the contrary, the invention includes all alternatives, modifications and equivalents as may be included within the spirit and scope of the present invention.

In accordance with the principles of the present invention, there is an orthodontic appliance for attachment to an archwire having a rectangular cross section. In that regard, a height dimension of the archwire is less than a width dimension. The orthodontic appliance comprises a body including a base portion from which a pair of jaws extend. Each jaw includes an opposing surface that defines a slot for receiving the archwire. The pair of opposing surfaces is configured to contact the archwire along two edges at ends of one side of the archwire and maintain a grip on the archwire during orthodontic treatment. The grip is maintained on the archwire by residual elastic strain due to an interference fit between the archwire and the slot and without plastic deformation of the appliance.

According to an aspect of the present invention there is provided an orthodontic appliance for attachment to an archwire having a rectangular cross section with a height dimension that is less than a width dimension, the orthodontic appliance comprising:
a body including a base portion from which a pair of jaws extend, each jaw including an opposing surface that defines a slot for receiving the archwire,
wherein the pair of opposing surfaces are configured to contact the archwire along two edges at ends of one side of the archwire.

Preferably, the base portion includes a pedestal portion between the pair of opposing surfaces in the slot. Preferably the pedestal portion has a planar surface that is configured to contact a side of the archwire when the opposing surfaces contact the two edges. Preferably this provides a triangular grip on the archwire established by contact at opposing edges along one side and on an opposite side of the archwire at the pedestal portion.

Preferably, each of the pair of opposing surfaces includes a concave portion. Preferably the concave portions are configured to contact the archwire only at the two edges and preferably provide a component of force along a longitudinal axis of the appliance.

Preferably, the opposing surfaces each include a tapered portion that intersects the corresponding concave portion at a nub. Preferably the tapered portions oppose one another to collectively define an opening to the slot, and the nubs are spaced apart by a dimension that is greater than or equal to the height dimension of the archwire. Preferably the base portion includes a pedestal portion between the concave portions in the slot, the pedestal portion being configured to contact a side of the archwire opposing the one side of the archwire when the concave portions contact the two edges. Preferably a dimension from the pedestal portion to the nubs is less than the width dimension of the archwire and is greater than the height dimension of the archwire.

Preferably, the base portion includes a pedestal portion separating a pair of ears and the opposing surfaces each includes a concave portion configured to contact the archwire at one edge of the two edges. Preferably the slot includes a hook chamber that is configured to receive the archwire when the body is in a treatment position on the archwire. Preferably the hook chamber consists of the pedestal portion, the pair of ears, and the concave portions.

Preferably, the opposing surfaces each include a tapered portion and a concave portion. Preferably the tapered portion and the concave portion of each opposing surface intersect at a nub. Preferably the tapered portions define an opening to the slot at tips of the jaws, and the nubs are spaced apart by a dimension that is greater than or equal to the height dimension of the archwire and less than a dimension of the tapered portions at the tips of the jaws.

Preferably, the body further includes a hook portion extending from the base portion in a direction opposite of the jaws. Preferably the hook portion and jaws define a longitudinal axis of the body. Preferably the slot includes an opening to receive the archwire in a direction parallel to the longitudinal axis.

Preferably, the opposing surfaces each includes a concave portion. Preferably the concave portions are configured to contact the archwire only at the two edges.

Preferably, the jaws provide 5 pounds of force to 10 pounds of force on the two edges.

Preferably, the body is a superelastic material.

Preferably, the body is a superelastic metal.

Preferably, there is an orthodontic appliance for attachment to an archwire having a rectangular cross section with a height dimension that is less than a width dimension. Preferably the orthodontic appliance comprises a body including a base portion from which a pair of jaws extend. Preferably each jaw includes an opposing surface. Preferably a slot is defined between the opposing surfaces for receiving the archwire. Preferably the pair of opposing surfaces are configured to contact the archwire at two locations consisting of two edges at ends of one side of the archwire. Preferably the base portion contacts the archwire on a side opposite the one side.

Preferably the body includes a base portion from which a pair of jaws extend, each jaw including an opposing surface that defines a slot for receiving the archwire, wherein the pair of opposing surfaces are configured to contact the archwire at three locations consisting of two edges at ends of one side of the archwire and a side opposite the one side.

According to another aspect of the present invention, there is provided a method of installing an orthodontic appliance on an archwire having a rectangular cross section with a height dimension that is less than a width dimension. Preferably the archwire is securable to one or more orthodontic brackets affixed to a patient's teeth. Preferably the method comprises inserting a body onto the archwire. Preferably the body includes a base portion from which a pair of jaws extend. Preferably the jaws include opposing surfaces that define a slot. Preferably inserting includes moving the body so that the archwire enters the slot with the height dimension of the archwire perpendicular to a longitudinal axis of the body. Preferably the method further includes rotating the body about the archwire while the archwire is in the slot until the height dimension of the archwire is parallel with the longitudinal axis.

Preferably, following rotating the body, the method further comprises removing the body from the archwire.

Preferably, removing includes rotating the body about the archwire until the longitudinal axis of the body is perpendicular with the height dimension of the archwire and removing the body from the archwire.

Preferably, following removing, the method further comprises reinstalling the body on the archwire.

Preferably, reinstalling the body on the archwire includes moving the body to a new location on the archwire and rotating the body about the archwire until the height dimension of the archwire is parallel with the longitudinal axis.

Preferably, inserting the body includes placing the body in an abutting relationship with one orthodontic bracket.

### BRIEF DESCRIPTION OF THE DRAWINGS

The accompanying drawings, which are incorporated in and constitute a part of this specification, illustrate embodiments of the invention and together with the detailed description given below, explain various aspects of the invention.
Fig. 1 is an elevation view of upper and lower dental arches with orthodontic brackets secured to individual teeth, archwires coupled to the orthodontic brackets, and archwire hooks and a stop secured to the archwires in accordance with embodiments of the invention.
Fig. 2 is a perspective view of an archwire hook according to one embodiment of the invention.
Fig. 3 is an elevation view of the archwire hook of Fig. 2.
Fig. 3A is a cross section view of an archwire of Fig. 1.
Fig. 4 is schematic cross-sectional view of an archwire hook of Fig. 2 shown in an initial installation position and in a treatment position on an archwire according to one embodiment of the invention.
Figs. 5, 6, 7, and 8 are a series of schematic views of an archwire hook being attached to an archwire according to an embodiment of the invention.
Figs. 9A, 9B, and 9C are schematic views of differently sized archwires held in position in embodiments of the archwire hook.
Fig. 10 is an archwire stop in accordance with one embodiment of the invention.
Fig. 11 is an elevation view of one embodiment of the archwire hook.

### DETAILED DESCRIPTION

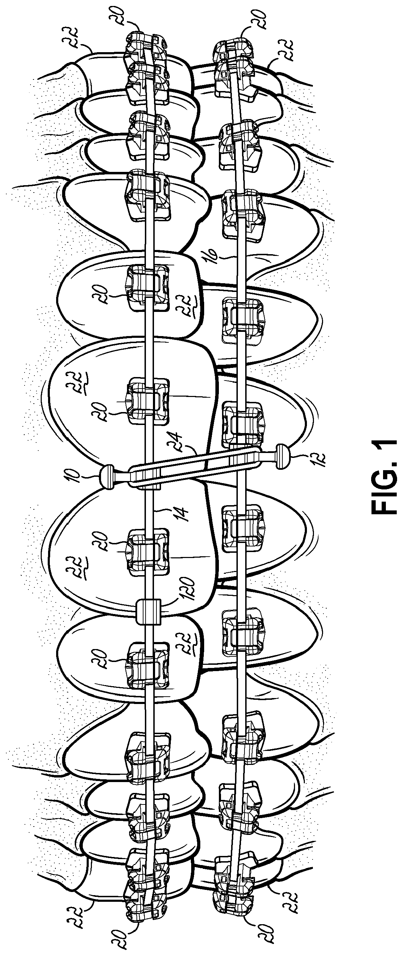

To these and other ends and with reference to Fig. 1, in one embodiment of the invention, an archwire hook is configured to be secured to an archwire and provides an anchor location to which additional orthodontic appliances are then secured. In the exemplary embodiment shown in Fig. 1, a pair of archwire hooks 10, 12 is shown in relation to a patient's upper and lower jaws during orthodontic treatment. One archwire hook 10 is secured to an upper archwire 14 on the upper jaw, and the other archwire hook 12 is secured to a lower archwire 16 on the lower jaw. Each archwire 14, 16 is coupled to corresponding brackets 20 attached to a patient's teeth 22 on the respective jaws. With this system, the patient undergoes orthodontic treatment as the archwires 14, 16 apply forces to the patient's teeth 22 to move them toward their desired, final positions. The patient's teeth 22 are also subject to corrective forces from an elastic 24 that extends between the archwire hook 10 secured the upper archwire 14 and the archwire hook 12 secured to the lower archwire 16. While a description is provided with reference to the archwire hook 10 on the archwire 14 on the patient's upper jaw in Fig. 1, the same description applies to the archwire hook 12 on the archwire 16 on the lower jaw. However, the archwire hook 10 and the archwire hook 12 do not need to have the same configuration to effectuate orthodontic treatment.

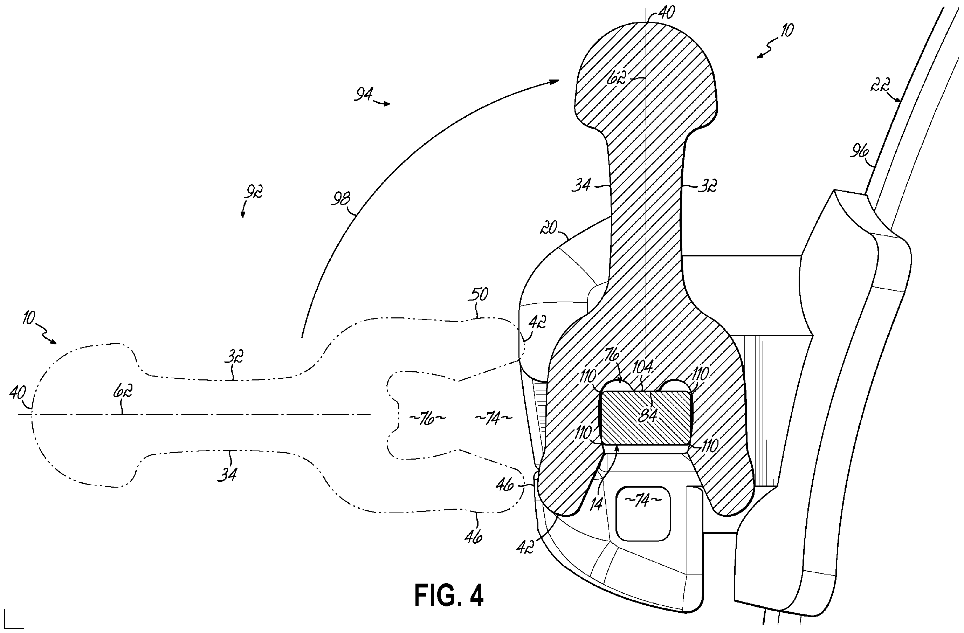

According to embodiments of the invention, the archwire hook 10 is not crimped in position on the archwire 14. Nevertheless, the archwire hook 10 securely grips on the archwire 14 with sufficient strength to resist inadvertent movement when subject to orthodontic forces imparted by the elastic 24. In the absence of deformation due to crimping, the grip of the archwire hook 10 on the archwire 14 is dependent upon a relative dimensional difference between one dimension of the archwire 14 and an internal dimension of the archwire hook 10. The outer dimension of the archwire 14 is larger than the corresponding internal dimension of the archwire hook 10. Thus, there is an interference fit between the archwire 14 and the archwire hook 10 in at least one relative orientation. This interference fit produces elastic deformation of the archwire hook 10 when it is attached to the archwire 14. The presence of residual elastic strain places forces on the archwire 14 tending to capture it withing the archwire hook 10 and eliminates any need for crimping. Because the manual crimping operation is eliminated, variation in the amount of plastic deformation is eliminated so that a strength of a grip of the archwire hook 10 on the archwire 14 is more consistent. While installation is described in detail below with reference to Figs. 4-8, in general, the clinician installs the inventive archwire hook 10 by inserting it in one direction relative to the archwire 14. With the archwire hook 10 in contact with the archwire 14 in the insertion direction, the clinician then applies torque to the archwire hook 10 to rotate the archwire hook 10 about the archwire 14 toward an installed, treatment position. Thus, installation requires rotational motion (for example, 90° of rotation) of the archwire hook 10 about the archwire 14. That forcible rotational motion expands the archwire hook 10 from an undeformed configuration on a small dimension of the archwire 14 to a deformed configuration to fit a larger dimension of the archwire 14. The clinician is therefore able to use rotational leverage to overcome the interference fit between the archwire hook 10 and the archwire 14. This torque produces elastic deformation during rotation and also when the archwire hook 10 is in the treatment position. That is, a predetermined amount of elastic strain remains in the archwire hook 10 when the archwire hook 10 reaches its treatment position. That residual elastic strain ensures a sufficient grip of the archwire hook 10 on the archwire 14 for orthodontic treatment.

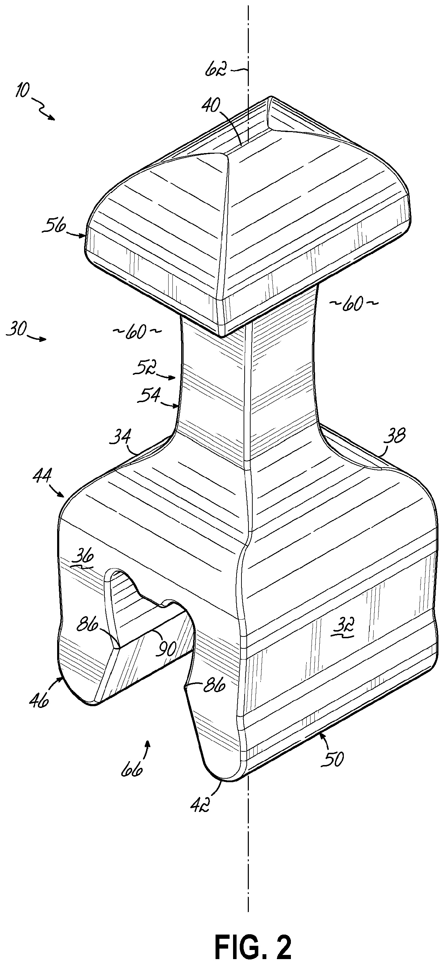

To those and other ends, with reference to Fig. 2, in one embodiment, the archwire hook 10 has a body 30 generally defining four sides in a rectangular-like cross-sectional configuration. For ease of description, the body 30 includes a lingual side 32, a labial side 34, a mesial side 36, and a distal side 38. While the sides 32, 34, 36, 38 are described with respect to anatomy, the archwire hook 10 is not limited to any particular orientation in the patient's mouth, though the hook 10 is designed to engage the archwire 14. Further, the sides 32, 34, 36, 38 extend from a gingival tip 40 to an occlusal end 42. Generally, the gingival tip 40 is configured to cooperate with an additional orthodontic appliance, such as the elastic 24 (see Fig. 1). And, the occlusal end 42 is configured to receive the archwire 14.

In that regard, with further reference to Fig. 2, the body 30 includes a base portion 44 from which a pair of jaws 46 and 50 extend and form the end 42 at the tips of the jaws 46 and 50. Also, from the base portion 44, a hook portion 52 extends in an opposing direction from the jaws 46 and 50. As shown, the hook portion 52 includes a stem 54 and a head 56, which extends from the stem 54 to form the gingival tip 40. The head 56 has an oversized bulbous configuration relative to the stem 54. The relative cross-sectional size difference between the stem 54 and each of the head 56 and the base portion 44 define a region 60 between the head 56 and the base portion 44 in which an orthodontic appliance, such as the elastic 24 (Fig. 1), may be installed during orthodontic treatment. The hook portion 52 and the base portion 44 together with the jaws 46, 50 define a longitudinal axis 62 of the body 30. In the exemplary embodiment, shown in Figs. 1 and 4, in a treatment position, the archwire hook 10 is oriented with the longitudinal axis 62 in an occlusal-gingival direction with the tip 40 pointed in the gingival direction, and consequently, the occlusal end 42 is pointed in an occlusal direction.

While a rectangular-like configuration of the body 30 in which the sides 32, 34, 36, and 38 generally extend from tip 40 to end 42 such that each of the base portion 44, the stem 54, and the head 56 have a rectangular cross-sectional configuration, other cross-sectional configurations are possible. For example, the stem 54 may have a right circular cylinder configuration and the head 56 may be spherical while the base portion 44 is rectangular with sides 32, 34, 36 and 38. Embodiments of the invention are not limited to the rectangular cross-sectional configuration shown in the figures.

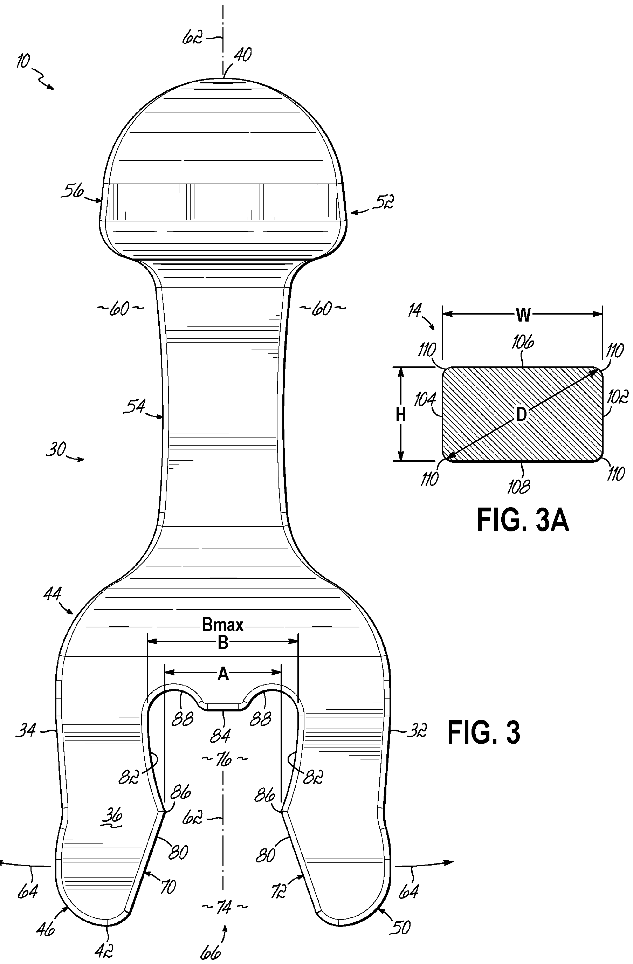

With reference to Figs. 2 and 3, the jaws 46 and 50 are elastically deformable in one or both directions as indicated by arrows 64 relative to the base portion 44. The jaws 46 and 50 are capable of opening and closing in response to application and removal of stress. That resilient flexing permits the jaws 46 and 50 to expand and then elastically recover during installation on archwire as is described below with reference to Figs. 4-8. The jaws 46, 50 generally define a slot 66 between them that receives the archwire 14 during installation and orthodontic treatment. The degree to which the jaws 46 and 50 are elastically expandable is predetermined by the dimensions of the slot 66 relative to the dimensions of the archwire 14.

With reference to Fig. 3, in an exemplary embodiment of the invention, opposing surfaces 70 and 72 of the respective jaws 46 and 50 define an opening 74 to a hook chamber 76 of the slot 66. The opposing surfaces 70 and 72 are configured to permit insertion of the archwire hook 10 on the archwire 14 in one direction via the opening 74 and then enable torque to expand the hook chamber 76 to fit the archwire 14 in the treatment position. In the exemplary embodiment shown, the opposing surfaces 70 and 72 are symmetrical formed about a plane coincident with the longitudinal axis 62. The opposing surfaces 70 and 72 each include a tapered portion 80 and a concave portion 82 of the slot 66. The base portion 44 also defines a portion of the slot 66 and in that regard defines a pedestal portion 84, which includes a planar surface at a gingival-most end of the slot 66. The pedestal portion 84 intersects the longitudinal axis 62. The base portion 44 also defines ears 88 that transition from the base portion 44 to the opposing surfaces 70 and 72 to each side of the pedestal portion 84. The concave portions 82, the pedestal portion 84, and the ears 88 collectively define the hook chamber 76.

For each surface 70 and 72, the tapered portion 80 and the concave portion 82 intersect at a nub 86. The tapered portion 80 has a planar configuration that is angled relative to the longitudinal axis 62. As shown the tapered portions 80 oppose one another and from a dimension at the nubs 86, taper outwardly to the tips or ends 42 of the body 30 to a larger dimension than the dimension at the nubs 86. By way of example, an angle formed between the tapered portion 80 and the axis 62 is less than 45° and may range from 10° to 30°. Collectively, the tapered portions 80 form a funnel-like configuration at the opening 74 of the slot 66. With this configuration, the archwire hook 10 is more easily assembled onto the archwire 14 as the hook 10 is generally guided into alignment with the archwire 14 by the tapered portions 80 as the archwire 14 enters the opening 74.

With continued reference to Figs. 3 and 3A, the tapered portions 80 intersect respective concave portions 82 at nubs 86, which may form an edge 90 (Fig. 2) along the surfaces 70 and 72. The opposing nubs 86 (and edges 90) are separated by a dimension, A. In the exemplary embodiment shown, the dimension A is the shortest distance between the opposing surfaces 70 and 72 between the hook chamber 76 and the opening 74. The dimension A between nubs 86 is related to dimensions of the archwire 14. In one embodiment, the dimension A is equal to or greater than an occlusal-gingival height dimension H of the archwire 14 and is less than a labial-lingual width dimension W of the archwire 14. By way of example, and not limitation, for a 0.014 inch by 0.025 inch archwire, the dimension A may be greater than 0.014 inch and less than 0.0025 inch. In one embodiment, with the interference fit between dimension A between the nubs 86 and the width W of the archwire 14, the archwire hook 10 is incapable of being assembled in an occlusal-gingival direction directly into engagement with the width dimension W. That is, in one embodiment, it is not possible to manually force the width dimension W of the archwire 14 between the nubs 68.

In addition, the concave portions 82 and ears 88 of the opposing surfaces 70, 72 produce an inverted J-like profile (when viewed in Fig. 3). The ears 88 intersect the pedestal portion 84 at the base portion 44 in the hook chamber 76. The ears 88 have a sufficiently large radius of curvature to reduce stress concentrations in a region at which the jaws 46, 50 merge with the base portion 44 when the jaws 46 and 50 are forced in the direction 64. Thus, the radius of the ears 88 may reduce the possibility of plastic deformation of the base portion 44 during installation.

As is described below with reference to Figs. 4-8, the concave portions 82 are configured to frictionally contact the archwire 14 during installation and grip the archwire 14 once the archwire hook 10 reaches the treatment position. The archwire hook 10 is completely within the hook chamber 76 in the treatment position. To that end, in the embodiment shown in Fig. 3, the dimensions between opposing concave portions 82 of the opposing surfaces 70 and 72 vary. As shown, a profile in Fig. 3 of the concave portions 82 is not a linear relationship and is unlike the tapered portions 80 in that regard. Rather, the profile of the concave portions 82 is defined by a quadratic or greater polynomial to provide an arcuate curvature of the hook chamber 76. Thus, the size of the hook chamber 76 gradually enlarges from the nubs 86 toward the pedestal portion 84 in a non-linear manner.

In the embodiment shown, the dimensions vary from a minimum at the nubs 86 (i.e., dimension A) to a maximum dimension (labeled Bmax) at or near transition from the curvature of the opposing surfaces 70 and 72 to the curvature of the ears 88. The maximum dimension (Bmax) of the hook chamber 76 between concave portions 82 may occur adjacent the pedestal portion 84, as shown. The maximum dimension Bmax is slightly larger (e.g., 0.0005 inches larger to allow for nominal manufacturing variations in the archwire dimensions) than the width W of the archwire 14. By way of example, for a 0.014 inch by 0.025 inch archwire, Bmax may be in a range from a minimum of 0.0255 inch to a maximum of 0.026 inch.

Relative to the dimensions of the archwire 14, the dimensions between opposing locations on the concave portions 82 (labeled B) are greater than the height dimension, H, of the archwire 14. However, at least some of the dimensions between opposing concave portions 82 are less than a width dimension, W, (see Fig. 3A) of the archwire 14. Where B dimensions are less than the width dimension, W, there is an interference fit between the size of the hook chamber 76 and the archwire 14. To accommodate the archwire 14 at these locations, the J-like profile of the concave portions 82 and ears 88 of the hook chamber 76 facilitate flexing of the jaws 46, 50 in the direction of arrows 64 during insertion of an archwire into the slot 66 and in particular during fitting the archwire 14 into the hook chamber 76.

In view of the above, one embodiment of installing the archwire hook 10 onto the archwire 14 is shown schematically with reference to Figs. 4-8. The archwire 14 may be installed on brackets 20 and so be relatively fixed in position because the brackets 20 are secured to the tooth 22. Embodiments of the invention are not limited to installation on an already installed archwire. For example, the archwire hook 10 may be assembled onto an archwire prior to coupling the archwire to orthodontic brackets. With reference to Fig. 3A, the archwire 14 has a lingual side 102, a labial side 104, a gingival side 106, and an occlusal side 108. Any two sides define edges 110, which are radiused, typically having a radius of a few thousandths of an inch (e.g., 0.003 inch). The archwire 14 may have a rectangular cross section in which the height dimension, H, (measured from the gingival side 106 to the occlusal side 108 is less than the width dimension, W (measured from the lingual side 102 to the labial side 104). By way of example only and not limitation, the archwire 14 may be any one of 0.014 inch by 0.025 inch, 0.016 inch by 0.025 inch, 0.017 inch by 0.025 inch, 0.018 inch by 0.025 inch, 0.019 inch by 0.025 inch, 0.021 inch by 0.025 inch, or 0.017 inch by 0.022 inch, among others. Other exemplary archwires are disclosed in U.S. App. No. 14/976,074, which is incorporated herein by reference in its entirety. These archwire may be referred to as "combi" wires and generally include lingual and labial sides that are convexly curved rather than being planar. Exemplary combi wires may have dimensions according to 0.014 inch by 0.0275 inch, 0.016 inch by 0.0275 inch, 0.018 inch by 0.0275 inch, 0.019 inch by 0.0275 inch, 0.020 inch by 0.0275 inch, 0.021 inch by 0.0275 inch. However, the archwire hook 10 may not be usable with square or round archwires.

With reference to Fig. 4, the archwire hook 10 is shown in an initial installation orientation indicated at 92 for engagement of the archwire hook 10 with the archwire 14. As shown, in the initial installation orientation, the archwire hook 10 is oriented with the longitudinal axis 62 generally perpendicular to a labial surface 96 of the tooth 22. The occlusal end 42 is oriented toward the tooth 22 with the opening 74 of the slot 66 positioned to receive the archwire 14.

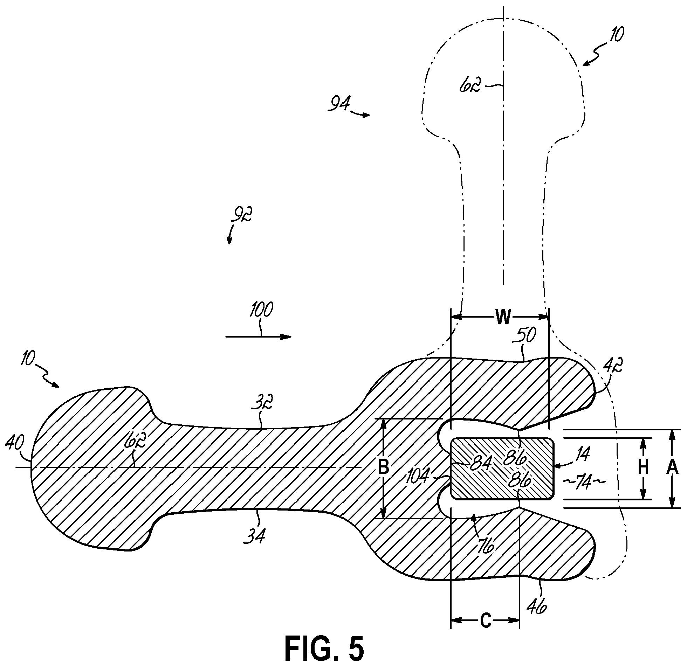

In Fig. 5, and with insertion of the archwire hook 10 indicated by arrow 100, the opening 74 receives the archwire 14 with the height dimension, H, (i.e., the narrowest dimension) oriented generally perpendicular to the longitudinal axis 62. The width dimension, W, (i.e., a larger dimension than the height H for an archwire of rectangular cross section) of the archwire 14 is thus oriented generally parallel to the longitudinal axis 62. Keeping in mind that the archwire hooks 10 are relatively small components (millimeters or less in dimension), alignment of the opening 74 with the archwire 14 requires less precision because of the funnel-like configuration of the tapered portions 80 of the opposing surfaces 70 and 72. As the archwire hook 10 is moved to engage the archwire 14 (in the direction of arrow 100), the tapered portions 80 assist the clinician by urging the archwire hook 10 to align with the archwire 14. In particular, the longitudinal axis 62 of the archwire hook 10 is urged into alignment with the archwire 14. The archwire hook 10 receives the archwire 14 between the nubs 86, as shown, and into the hook chamber 76 and into contact with the pedestal portion 84. During insertion, the opposing surface 72 faces the gingival side 106 and the opposing surface 70 faces the occlusal side 108. The pedestal portion 84 is brought into contact with the labial side 104 of the archwire 14.

In this position, the archwire hook 10 is in initial engagement with the archwire 14. The archwire hook 10 is not, however, coupled to the archwire 14 and would likely fall off the archwire 14 if released. While the dimension A of the archwire hook 10 may be equal to the height dimension H, in one embodiment, the height dimension, H, of the archwire 14 is less than the dimension A between the nubs 86. During insertion of the archwire hook 10 according to Figs. 4 and 5, the archwire 14 fits between the nubs 86 without interference. That is, the jaws 46 and 50 are not deformed during initial insertion of the archwire hook 10 onto the archwire 14.

With the archwire 14 in contact with the pedestal portion 84, the archwire 14 may extend from the hook chamber 76 into the opening 74. As an example, a dimension, C, from the pedestal portion 84 to the nubs 86 is equal to or greater than the height dimension, H, of the archwire 14 but less than the width dimension, W, of the archwire 14. By way of specific example, for a 0.014 inch by 0.025 inch archwire, the dimension C may be at least 0.014 inch.

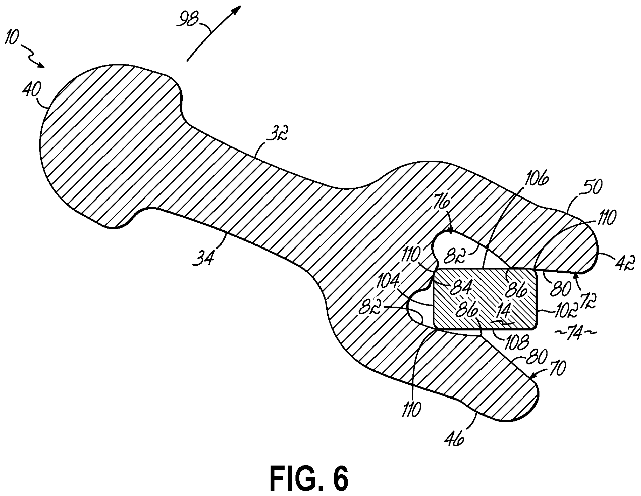

Once the archwire hook 10 is engaged with the archwire 14, as is shown in Fig. 5, the clinician rotates the archwire hook 10 about the archwire 14. In one embodiment, rotation is toward the gingiva on the jaw on which the archwire 14 is mounted. However, embodiments of the present invention are not limited to gingival rotation as shown. The hook 10 may be rotated in an occlusal direction and be secured to the archwire 14. For example, gingival rotation is schematically shown in Figs. 6-8 for an archwire 14 mounted on the maxillary jaw (see Fig. 1). The clinician may use of a pair of pliers, such as needle nose pliers to maintain a grip on the archwire hook 10 during rotation. No specialized tool is required. One advantage according to embodiments of the invention, is that the archwire hook 10 may be installed on the archwire 14 in an abutting relationship with the adjacent bracket 20. This is shown, by way of example only, in Fig. 1.

In Fig. 6, rotation (as indicated by arrow 98) of the archwire hook 10 while the archwire 14 is partly in the hook chamber 76 forces the gingival side 106 of the archwire 14 to contact the nub 86 of surface 72 and forces an opposing surface, for example, the occlusal side 108 (or an edge between the occlusal side 108 in the labial side 104) of the archwire 14 into contact with concave portion 82 of surface 70. The labial side 104 of the archwire 14 may be in contact with the pedestal portion 84. The longitudinal axis 62 of the archwire hook 10 is positioned at an off-axis angle relative to the installation orientation shown in Fig. 5.

Further rotational motion uses leverage (e.g., via the pliers) to expand a dimension between the jaws 46 and 50. The archwire 14 itself is wedged into the hook chamber 76 as directed by the opposing surfaces 70 and 72. That is, the arcuate configuration of the opposing concave portions 82 in combination with the pedestal portion 84 urges the archwire into the hook chamber 76. Not being bound by theory, the archwire 14 may be wedged into the hook chamber 76 by contact between the labial side 104 of the archwire 14 and the pedestal portion 84 and/or the concave portion 82 of the opposing surfaces 70. The surfaces 70, 72 may slide along those portions of the archwire 14 as the jaws 46 and 50 are forcibly expanded which draws the diagonal dimension D of the archwire 14 toward the nub 86 of the surface 72.

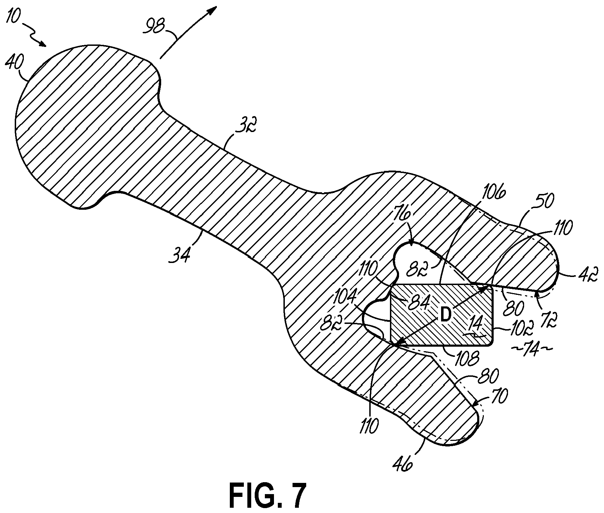

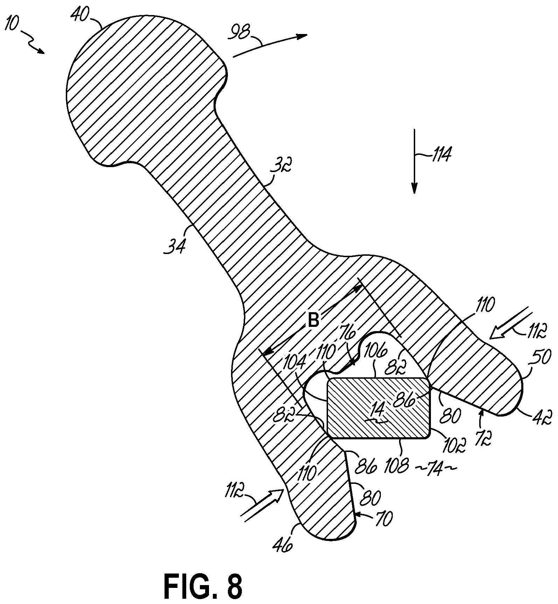

With the archwire 14 held in a substantially stationary position by the brackets 20, torque on the archwire hook 10 in the position shown causes enlargement of the hook chamber 76 and opening 74 as the jaws 46 and 50 are wedged apart by the archwire 14. This is shown schematically Fig. 7 with the initial undeformed configuration of the jaws 46, 50 in phantom line. By forcible rotation according to 98 the archwire 14 is used to push the jaw 46 away from jaw 50 with the gingival side 106 of the archwire 14 sliding along opposing surface 72 toward the nub 86. The pedestal portion 84 rotates along the labial side 104 toward the gingival side 106 while the edge between the occlusal side 108 and the labial side 104 slides along the concave portion 82 toward the nub 86 on the surface 70. The jaws 46 and 50 elastically deform in a region of the base portion 44 around the ears 88. Thus, a diagonal dimension D, the largest dimension of the archwire 14, is forced toward, and then into, the hook chamber 76 (see Fig. 8). In this way, the opposing surfaces 70 and the opposing surface 72 are pushed away from each other by elastic movement of the jaws 46 and 50. This increases the dimensions B of the hook chamber 76.

With reference to Fig. 8, further forcible rotation according to 98 expands the hook chamber 76 to a point at which the diagonal dimension D of the archwire 14 enters the hook chamber 76. In that position, the diagonal dimension D extends between opposing concave portions 82. The hook chamber 76 expands to its largest dimension. The dimensions B within the hook chamber 76 may reach a maximum at or near this orientation in which the diagonal dimension D of the archwire 14 is wedged between the concave portion 82 along the opposing surfaces 70 on one side and the nub 86 along the opposing surface 72 on the opposing side. Maximum deformation of the jaws 46 and 50 when the archwire 14 is oriented at or near this relative position is less than a yield stress of the material. From this position, with further rotation toward the treatment position, the jaws 46 and 50 recover some of their elastic strain. This is indicated by arrow 112.

Further rotation of the archwire hook 10 according to 98 in Fig. 8 causes the archwire hook 10 to move further toward the treatment position 94 shown in Fig. 4. With further rotation shown in Fig. 8, the jaws 46 and 50 may revert toward their original positions as the archwire hook 10 rotates with the hook chamber 76 being expanded to receive the diagonal dimension D to the hook chamber 76 receiving the width dimension W of the archwire 14. This rotation may be spontaneous or require less torque as the archwire hook 10 recovers a portion of its elastic deformation from the maximum elastic strain experienced as the diagonal dimension D passes between the nubs 86. This rotational motion may also include a small axial movement according to arrow 114 as the archwire hook 10 further recovers elastic energy from the greatest elastic expansion of the jaws 46, 50 associated with the orientation of the diagonal dimension D of the archwire 14 in the slot 66. The axial motion 114 may be due to the maximum B dimension of the hook chamber 76 being adjacent the pedestal portion 84. The hook 10 may move axially according to the curvature of the concave portions 82 and toward the maximum B dimension at the pedestal portion 84. As can be appreciated, the jaws 46 and 50 (via the concave portions 82 of the opposing surfaces 70 and 72) squeeze the archwire 14. The shape of concave portions 82 combined with the compression forces on the archwire 14 due to the elastic deformation may induce further relative rotational motion as the archwire hook 10 is releases elastic energy. This may include releasing the elastic energy stored in the base portion 44, for example, proximate the ears 88. That elastic energy release may be spontaneous until the relative orientation shown in Fig. 4 (i.e., the treatment position 94) is reached.

Referring to Fig. 4, in the treatment position 94, the archwire 14 is sandwiched between the opposing concave portions 82 and abuts the pedestal portion 84. The jaws 46 and 50 do not fully revert to their original position due to an interference fit between the archwire 14 and the original, undeformed dimensions of the hook chamber 76 (i.e., the original B dimensions of Fig. 3). That is, the archwire 14 holds the jaws 46, 50 apart when the archwire hook 10 is in the treatment position 94. In one embodiment, the hook chamber 76 contacts the archwire 14 at three locations. The gingival side 106 of the archwire 14 contacts the pedestal portion 84, and the concave portions 82 contact two edges 110 of the archwire 14 at the ends of the occlusal side 108. Further in that regard, the concave portions 82 do not contact the sides 102, 104 of the archwire 14. As can be appreciated from Fig. 4, this configuration roughly provides a triangular, three-location, grip on the archwire 14 with the pedestal portion 84 providing an apex of the grip on the gingival side 106 of the archwire 14, and the concave portions 82 contacting the edges 110 at the ends of the occlusal side 108 (i.e., the opposite side of the archwire 14) to provide two other apexes of the grip. As shown, the concave portions 82 contact the archwire 14 only at the edges 110. The concave portions 82 do not contact any of the sides 102, 104, or 106. In addition, due to the shape of the concave portions 82, the clamping force of the jaws 46, 50 forces the archwire 14 toward the pedestal portion 84 to maximize the stability of the grip. That is, a component of the clamping force is parallel to the longitudinal axis 62 in the direction of the pedestal portion 84. With the jaws 46, 50 maintaining some residual elastic deformation it is estimated that there will be 5 to 10 pounds of force on the opposing edges 110 of the archwire 14. With the archwire hook 10 in the treatment position, the archwire hook 10 is usable for treatment.

Because elastic strain is recoverable, the archwire hook 10 may be removed from the archwire 14 by a reverse rotation without damaging the archwire 14 or the archwire hook 10. That is, forcible rotation from the treatment position 94 (Fig. 4) to the initial installation position 92 (Figs 4 and 5) allows the jaws 46, 50 to revert to their undeformed positions. Thus, in one embodiment, the clinician may install the archwire hook 10 at one location on the archwire 14 according to Figs. 4-8, uninstall it from that location by a reverse rotation, move the hook 10 to a new location, and then reinstall the hook 10 by repeating the rotation 98 shown in Figs. 4-8. In that regard, advantageously, and as is described in relation to Figs. 4-8, the archwire hook 10 may be installed on an archwire, uninstalled from that archwire, moved to new location, and then be reinstalled on the same or different archwire by relative rotation about the archwire. Further, the archwire hook 10 may be assembled in an abutting or near abutting position relative to an orthodontic bracket 20 because of the lack of any need for a specialized tool (see, e.g., Fig. 1.) Thus, according to embodiments of the invention, the clinician may reposition the archwire hook 10 as many times as necessary until the desired position for the archwire hook 10 is identified.

As that term is used herein elastic deformation means a change in dimension (i.e., strain, which is typically measured in extension per unit length) directly proportional to and in phase with an increase or a decrease in applied force. As applied to Fig. 3, the jaws 46, 50 elastically deform in the direction of arrow 64 in direct proportion to the torque applied during installation. The torque needed is determined by the dimensions of the archwire 14 relative to the dimensions of the slot 66. By way of further explanation, plastic deformation is deformation that remains permanent when a deforming load is removed. In one embodiment of the invention, the archwire hook 10 does not plastically deform during installation or during removal.

In one exemplary embodiment, the archwire hook 10 is metallic. In that regard, at least the body 30 is metallic. The metal of the archwire hook 10 is elastically deformed during installation on an archwire 14. In one embodiment, the metal is capable of elastically deforming by an amount the permits an initial one of the diagonal dimensions D of the archwire 14 to enter the hook chamber 76. The dimensions of the hook chamber 76 are smaller than the diagonal dimensions D of the archwire 14. By way of example, and not limitation, the archwire hook 10 may be a superelastic material. Superelastic materials can sustain relatively large strains (e.g., 6 % or more) when a stress is applied without plastic deformation. These materials recover their original, undeformed shape after the stress is removed. Exemplary superelastic materials include metals and alloys, such as nickel titanium, or nickel titanium and other alloying elements (e.g. chromium (Cr), iron (Fe), vanadium (V), aluminum (Al), copper (Cu), cobalt (Co)), such as nickel/titanium/copper or nickel/titanium/ copper/chromium. Other superelastic alloys are described in commonly owned U.S. Patent No. 10,463,453 issued November 5, 2019, which is incorporated herein by reference in its entirety.

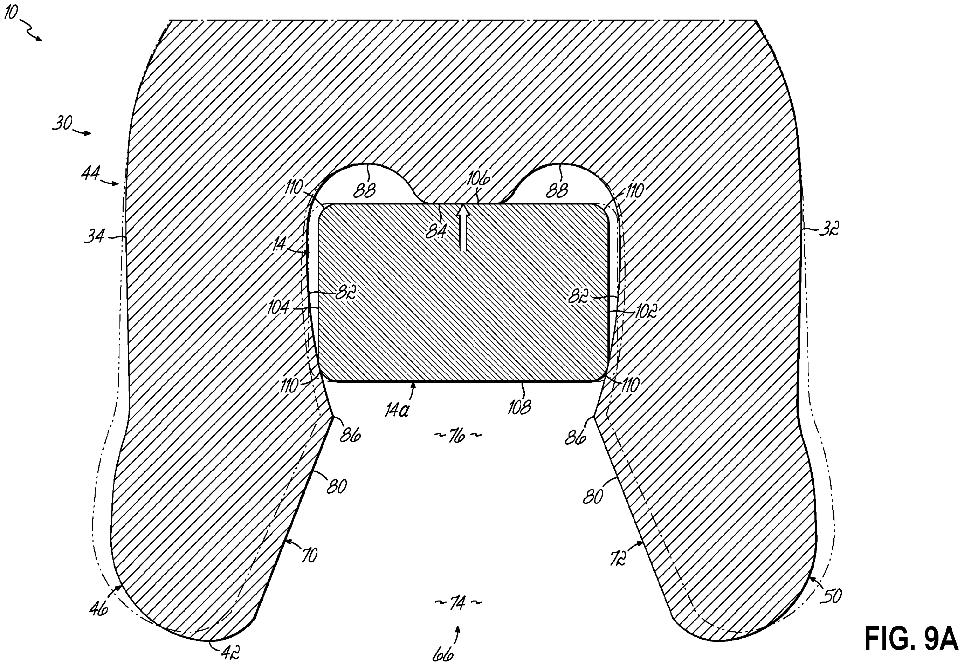

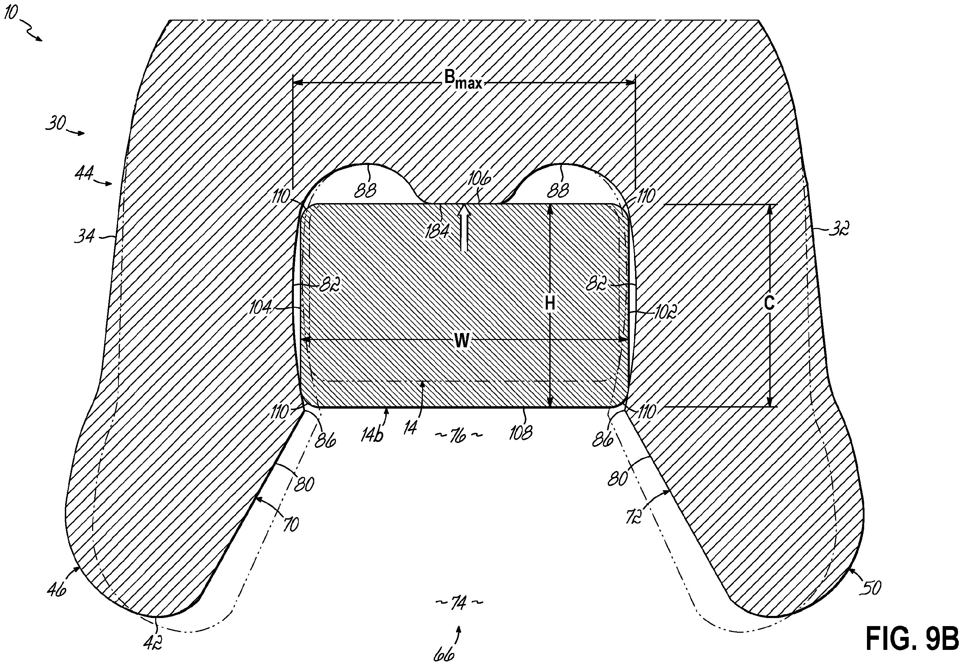

With reference to Figs. 9A and 9B, different exemplary archwires are shown coupled with the archwire hook 10 in the treatment position described above. With reference to Fig. 9A, an archwire 14a is shown in the hook chamber 76. A three-location contact is shown between the concave portions 82 and the pedestal portion 84 and the archwire 14a. For example, the concave portions 82 contact edges 110 at the occlusal side 108 of the archwire 14a. And, the pedestal portion 84 contacts the gingival side 106. In this position, the archwire 14a forces the jaw 46 and 50 outward so that there is elastic strain present in the jaws 46 and 50. Not being bound to any theory, it is believed that the materials near the ears 88 is strained. The elastic strain produces a residual force in the direction of the arrow at the pedestal portion 84. The triangular configuration of the elastic grip of the archwire hook 10 on the archwire 14a holds the archwire hook 10 in position during orthodontic treatment. As the archwire size increases, as is shown in phantom line in Fig. 9A, the edges 110 at the gingival side 106 approach contacting the concave portions 82 adjacent the ears 88.

Further increases in archwire size, in width W and in height H is shown in Fig. 9B. As the archwire size increases to fill the hook chamber 76, the archwire hook 10 may not be usable for that archwire size. Thus, archwire hooks 10 having different dimensions of A, B, and C may be required to fit selected archwire sizes. For example, as the height dimension H of an archwire 14b approaches the dimension C of the hook chamber 76, the force in the direction of the arrow at the pedestal portion 84 may diminish. The grip of the archwire hook 10 on the archwire 14b may be reduced below a threshold at which the archwire hook 10 is usable on that sized archwire. A similar situation may exist as the width dimension W of the archwire approaches the Bmax dimension of the hook chamber 96. As shown, the edges 110 (or areas proximate those edges) at the gingival side 106 contact the concave portion 82. This condition may also reduce the residual force in the direction of the arrow at the pedestal portion 84. It is believed as the residual force is reduced, the grip and/or stability of the archwire in the hook chamber 76 is reduced. The archwire 14b may represent that largest archwire dimensions usable in the hook chamber 76 shown.

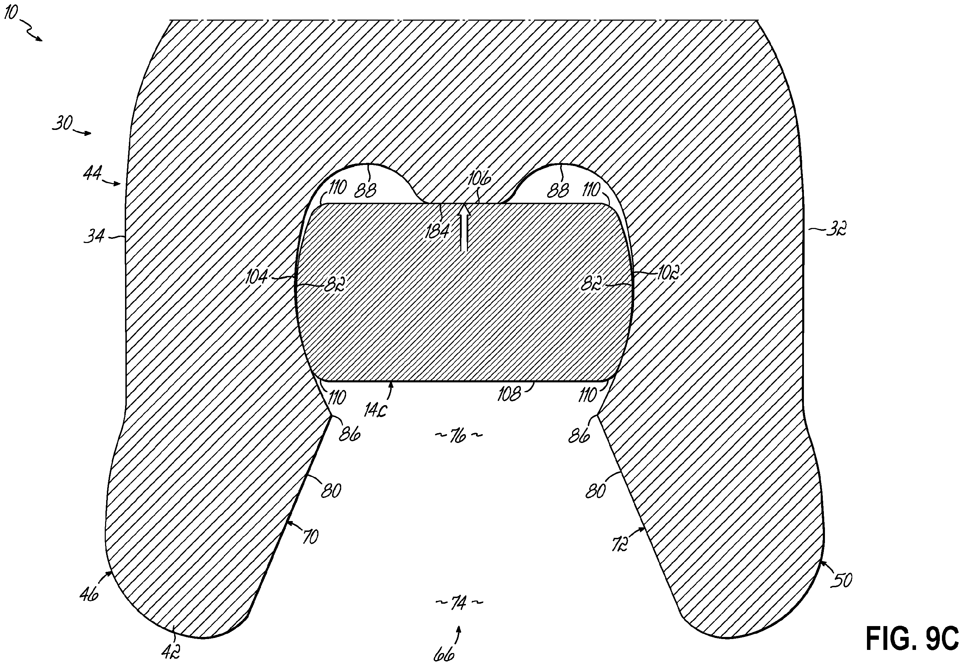

Another exemplary archwire 14c is shown in Fig. 9C. The archwire 14c may be referred to as a Combi wire. As shown, the labial and lingual sides 102, 104 are rounded rather than being flat or planar and is unlike the archwires 14, 14a, and 14b. Nevertheless, the concave portions 82 contact the archwire 14c along the edges 110 at the occlusal side 108. With the jaws 46 and 50 being strained outwardly, they produce a residual elastic force on the archwire 14c. A component of that force, due to the shape of the concave portions 82, pushes the archwire 14c against the pedestal portion 84. This produces a three-point or triangular grip on the archwire 14c in the same manner as that described above for archwires 14 and 14a.

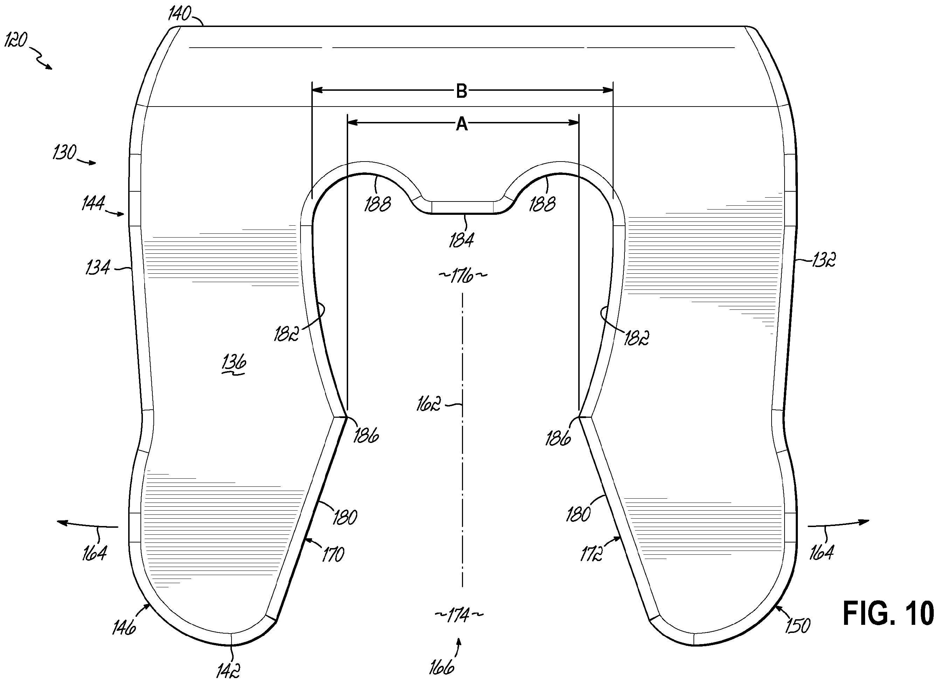

In accordance with one embodiment of the invention, an archwire stop 120 is also shown in Fig. 1 and is described below specifically with reference to Fig. 10 in which like reference numerals refer to like elements of the archwire hook 10 of Figs. 2-8. The description of the archwire hook 10 is equally applicable to the archwire stop 120. In that regard, the archwire stop 120 has a body 130, though the stop 120 lacks the hook portion 52 of the archwire hook 10. Like the hook 10, the body 130 includes a lingual side 132, a labial side 134, a mesial side 136, and a distal side 138. While the sides 132, 134, 136, 138 are described with respect to anatomy, the archwire stop 120 is not limited to any particular orientation in the patient's mouth though it is designed to engage the archwire 14. Further, the sides 132, 134, 136, 138 extend from a gingival tip 140 on the to an occlusal end 142. And, the occlusal end 142 is configured to receive the archwire 14. Either or both the mesial side 136 and the distal side 138 are configured to abut an orthodontic bracket 20 to stop relative movement between the bracket 20 and the archwire 14.

With further reference to Fig. 10, the body 130 includes a base portion 144 from which a pair of jaws 146 and 150 extend and form the end 142 at the tips of the jaws 146 and 150. The base portion 144 together with the jaws 146, 150 define a axis 162 of the body 130. In the exemplary embodiment of Fig. 10, the archwire stop 120 is oriented with the axis 162 in an occlusal-gingival direction with the end 140 facing in the gingival direction, and consequently, the occlusal end 142 is pointed in an occlusal direction. It will be appreciated that the end 140 may face in the occlusal direction.

With reference to Fig. 10, the jaws 146 and 150 are elastically deformable in one or both directions as indicated by arrows 164. That resilient flexing permits the jaws 146 and 150 to expand and then elastically recover during installation on the archwire 14 in the same manner as that described above with reference to the archwire hook 10 and shown in Figs. 4-8. The jaws 146, 150 generally define a slot 166 between them that receives the archwire 14 during installation and orthodontic treatment. The degree to which the jaws 46 and 50 are elastically expandable is predetermined by the dimensions of the slot 66 relative to the dimensions of the archwire 14.

In an exemplary embodiment of the invention, opposing surfaces 170 and 172 of the respective jaws 146 and 150 define an opening 174 to a hook chamber 176 of the slot 166. As shown, the opposing surfaces 170 and 172 may be symmetrical formed about a plane coincident with the longitudinal axis 162. The opposing surfaces 170 and 172 each include a tapered portion 180 at the opening 174 and a concave portion 182 and a pedestal portion 184 to define the hook chamber 176. For each surface 170 and 172, the tapered portion 180 and the concave portion 182 intersect at a nub 186. The opposing surfaces 170 and 172 are configured to permit insertion of the archwire stop 120 on the archwire 14 in one direction and then enable torque to expand the hook chamber 176 to fit the archwire 14.

In that regard, the tapered portion 180 has a planar configuration that is angled relative to the longitudinal axis 162. Collectively, the tapered portion 180 of each of the jaws 146 and 150 is angled toward the longitudinal axis 162 and collectively form a funnel-like configuration at the opening 174 of the slot 166. With this configuration, the archwire stop 120 is more easily assembled onto the archwire 14 as the stop 120 is generally guided into alignment with the archwire 14 by the tapered portions 180 as the archwire 14 enters the opening 174.

With continued reference to Fig. 10, the tapered portions 180 intersect respective concave portions 182 at nubs 186, which may form an edge 90 (Fig. 2) along the surfaces 70 and 72. The opposing nubs 86 (and edges 190) are separated by a distance, A. In the exemplary embodiment shown, the dimension A is the shortest distance between the opposing surfaces 70 and 72 between the hook chamber 76 and the opening 74. The dimension A between nubs 86 is related to a height dimension, H, (see, e.g., Fig. 3A) of the archwire 14. In one embodiment, the dimension A is equal to or greater than an occlusal-gingival height dimension H (see Fig. 3A) of the archwire 14.

In addition, the concave portions 182 of the opposing surfaces 170, 172 produce an inverted J-like profile (when viewed in Fig. 9). The concave portions 182 intersect the pedestal portion 184 at the base portion 144 to form ears 188 in the hook chamber 176. The ears 188 have a sufficiently large radius of curvature to reduce stress concentrations in a region at which the jaws 146, 150 merge with the base portion 144 due to deformation. Thus, the ears 188 may reduce the possibility of plastic deformation of the base portion 144 during installation.

The archwire stop 120 may be installed and uninstalled in a similar manner as the archwire hook 10, described above. In that regard, the jaws 146, 150 elastically expand when the stop 120 is inserted on the archwire 14 and then torqued 90° as is generally shown in Figs. 4-8 with respect to the archwire hook 10. A reverse rotational torque motion may be used to remove the archwire stop 120 from the archwire 14.

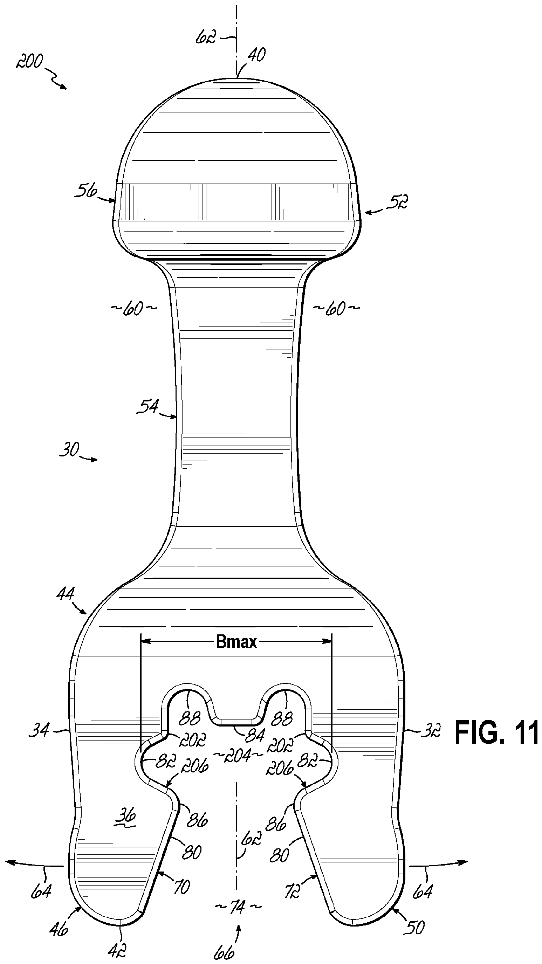

In one embodiment of the invention, and with reference to Fig. 11 in which like reference numerals refer to like structure of Figs. 1-9C, an archwire hook 200 is attachable and detachable to an archwire in a similar manner as the archwire hook 10. The archwire hook 200 differs in a configuration of the slot 66. In that regard, a hook chamber 204 differs from the hook chamber 76 of the archwire hook 10 shown in Fig. 3 in the change of the B dimensions between opposing concave portions 82. That dimension reaches its maximum at a location midway between the nubs 86 and the pedestal portion 84 rather than near the pedestal portion 84. The concave portions 82 do not therefore provide a gradually increasing B dimension in the direction of the pedestal portion 84. Instead, the B dimension increases from the nubs 86 according to the concave portions 82 to a maximum and then decreases in the direction of the pedestal portion 84 to a dimension that is about one-half of the difference between the C dimension and the maximum B dimension. This configuration produces a shoulder 202 between the concave portions 82 and the ears 88.

The shoulder 202 may define a surface oriented nearly parallel (within a few degrees) to the longitudinal axis 62 and so also be nearly perpendicular to the planar surface of the pedestal portion 84. These relative orientations produce a wrench-like configuration in the gingival-most one-half of the hook chamber 204, which is advantageous during orthodontic treatment.

Although not shown, during insertion, opposing edges of an archwire may contact the concave portions 82 at a location near the nubs 86 in the hook chamber 204 (near arrow 206). The orientation of this surface of the concave portions 82 may provide an increased force component on the archwire in the direction of the pedestal portion 84 relative to the force component observed for the concave portions 82 of the archwire hook 10 of Fig. 3. With that force, the archwire may be held in position with a similar three-location contact as with the archwire hook 10 of Fig. 3. That is, opposing edges of the archwire are contact the opposing concave portions 82 near nubs 86 with a gingival surface of the archwire contacting the planar surface of the pedestal portion 84.

With the wrench-like configuration, an archwire may be forcibly held against the pedestal portion 84 by the concave portions 82. The shoulders 202 may limit or inhibit rotational motion of the archwire hook 200 about the archwire. Slight rotational movement of the archwire hook 200 under torque loads observed during orthodontic treatment may cause one of the shoulders 202 to engage a side of the archwire and so stop rotational movement. The shoulders 202 may not prevent removal of the archwire hook 200 from the archwire according to the procedure described above. In one embodiment, one or both shoulders 202 may contact a labial surface and/or a lingual surface of the archwire.

While the present invention has been illustrated by a description of various embodiments and while these embodiments have been described in some detail, it is not the intention of the inventors to restrict or in any way limit the scope of the appended claims to such detail. Thus, additional advantages and modifications will readily appear to those of ordinary skill in the art. The various features of the invention may be used alone or in any combination depending on the needs and preferences of the user.

## Claims

1. An orthodontic appliance for attachment to an archwire having a rectangular cross section with a height dimension that is less than a width dimension, the orthodontic appliance comprising:
a body including a base portion from which a pair of jaws extend, each jaw including an opposing surface that defines a slot for receiving the archwire,
wherein the pair of opposing surfaces are configured to contact the archwire along two edges at ends of one side of the archwire.

2. The orthodontic appliance of claim 1 wherein the base portion includes a pedestal portion between the pair of opposing surfaces in the slot, and wherein the pedestal portion has a planar surface that is configured to contact a side of the archwire when the opposing surfaces contact the two edges.

3. The orthodontic appliance of claim 1 or claim 2 wherein each of the pair of opposing surfaces includes a concave portion, and wherein the concave portions are configured to contact the archwire only at the two edges.

4. The orthodontic appliance of claim 3 wherein the opposing surfaces each include a tapered portion that intersects the corresponding concave portion at a nub,
wherein the tapered portions oppose one another to collectively define an opening to the slot, and the nubs are spaced apart by a dimension that is greater than or equal to the height dimension of the archwire,
wherein the base portion includes a pedestal portion between the concave portions in the slot, the pedestal portion being configured to contact a side of the archwire opposing the one side of the archwire when the concave portions contact the two edges, and
wherein a dimension from the pedestal portion to the nubs is less than the width dimension of the archwire and is greater than the height dimension of the archwire.

5. The orthodontic appliance of any preceding claim wherein the base portion includes a pedestal portion separating a pair of ears and the opposing surfaces each includes a concave portion configured to contact the archwire at one edge of the two edges, wherein the slot includes a hook chamber that is configured to receive the archwire when the body is in a treatment position on the archwire, the hook chamber consisting of the pedestal portion, the pair of ears, and the concave portions.

6. The orthodontic appliance of any preceding claim wherein the opposing surfaces each include a tapered portion and a concave portion, the tapered portion and the concave portion of each opposing surface intersect at a nub, and wherein the tapered portions define an opening to the slot at tips of the jaws and the nubs are spaced apart by a dimension that is greater than or equal to the height dimension of the archwire and less than a dimension of the tapered portions at the tips of the jaws.

7. The orthodontic appliance of any preceding claim wherein the body further includes a hook portion extending from the base portion in a direction opposite of the jaws, the hook portion and jaws defining a longitudinal axis of the body, and wherein the slot includes an opening to receive the archwire in a direction parallel to the longitudinal axis.

8. The orthodontic appliance of any preceding claim wherein the body is a superelastic material, preferably the body is a superelastic metal.

9. An orthodontic appliance of any preceding claim wherein the body includes a base portion from which a pair of jaws extend, each jaw including an opposing surface that defines a slot for receiving the archwire,
wherein the pair of opposing surfaces are configured to contact the archwire at three locations consisting of two edges at ends of one side of the archwire and a side opposite the one side.

10. A method of installing an orthodontic appliance on an archwire having a rectangular cross section with a height dimension that is less than a width dimension, the archwire being securable to one or more orthodontic brackets affixed to a patient's teeth, the method comprising:
inserting a body onto the archwire, the body including a base portion from which a pair of jaws extend, the jaws including opposing surfaces that define a slot, wherein inserting includes moving the body so that the archwire enters the slot with the height dimension of the archwire perpendicular to a longitudinal axis of the body; and
rotating the body about the archwire while the archwire is in the slot until the height dimension of the archwire is parallel with the longitudinal axis.

11. The method of claim 10 wherein following rotating the body, the method further comprises:
removing the body from the archwire.

12. The method of claim 11, wherein removing includes rotating the body about the archwire until the longitudinal axis of the body is perpendicular with the height dimension of the archwire; and
removing the body from the archwire.

13. The method of claim 11 or claim 12 wherein following removing, the method further comprises reinstalling the body on the archwire.

14. The method of claim 13 wherein reinstalling the body on the archwire includes:
moving the body to a new location on the archwire; and
rotating the body about the archwire until the height dimension of the archwire is parallel with the longitudinal axis.

15. The method of any of claims 10 to 14 wherein inserting the body includes placing the body in an abutting relationship with one orthodontic bracket.
